# FASCICULE DE BREVET EUROPEEN

(11) **EP 3 491 267 B1**
(45) Date de publication et mention de la délivrance du brevet: **23.11.2022**
(21) Numéro de dépôt: 17754754.4
(22) Date de dépôt: 26.07.2017
(51) Int. Cl.: F16F 15/14

(54) **DISPOSITIF DE TRANSMISSION DE COUPLE AVEC DISPOSITIF D'AMORTISSEMENT PENDULAIRE**
DREHMOMENTÜBERTRAGUNGSVORRICHTUNG MIT PENDELARTIGER DÄMPFUNGSVORRICHTUNG
TORQUE TRANSMISSION DEVICE WITH PENDULAR DAMPING DEVICE

(30) Priorité: 27.07.2016 FR 1657203
(43) Date de publication de la demande: 05.06.2019
(73) Titulaire: Valeo Embrayages, 80009 Amiens Cedex 2 (FR)
(72) Inventeur: VIGREUX, Antoine, 80009 Amiens (FR); FAFET, Olivier, 80009 Amiens (FR); MALLEY, Matthieu, 80009 Amiens cedex 2 (FR)
(86) Numéro de dépôt international: PCT/FR2017/052089
(87) Numéro de publication internationale: WO 2018/020158

(56) Documents cités:
- WO-A1-2015/028234
- DE-A1-102009 042 836
- DE-A1-102013 221 537
- DE-A1-102014 217 451

## Description

La présente invention concerne un dispositif de transmission de couple, notamment un double volant amortisseur, avec un dispositif d'amortissement pendulaire. Ce dispositif de transmission de couple est par exemple intégré à un système de transmission de véhicule automobile.

Un tel dispositif d'amortissement pendulaire met classiquement en œuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles.

Un double volant amortisseur comprenant un dispositif d'amortissement pendulaire est connu de la demande DE 10 2014 208 126. Pour amortir la venue en position de butée d'un corps pendulaire contre le support, et éviter ainsi les bruits et l'usure associés à cette venue en position de butée, cette demande enseigne de munir chaque rivet reliant les deux masses pendulaires de ce corps pendulaire de caoutchouc, ce caoutchouc s'interposant alors entre le rivet et le support lors d'une telle venue en position de butée.

Ce caoutchouc peut ne pas amortir suffisamment les chocs entre corps pendulaire et support. Le document DE 10 2009 042836 A1 est considéré comme étant l'état de la technique le plus proche de l'objet de l'invention et divulgue les caractéristiques du préambule de la revendication indépendante 1.

Il existe un besoin pour améliorer l'amortissement des chocs entre le support et des corps pendulaires au sein d'un dispositif de transmission de couple tel qu'un double volant amortisseur.

L'invention vise à répondre à ce besoin et elle y parvient, selon l'un de ses aspects, à l'aide d'un dispositif de transmission de couple tel qu'un double volant amortisseur, ce dispositif étant selon la revendication 1 et comprenant :
- un composant mobile en rotation autour d'un axe, et
- un dispositif d'amortissement pendulaire, comprenant un support rapporté sur le composant et au moins un corps pendulaire dont le déplacement par rapport au support est guidé par au moins deux organes de roulement,
le dispositif de transmission de couple comprenant un système d'amortissement de butée solidaire du support du dispositif d'amortissement pendulaire et permettant d'amortir au moins les venues en position de butée suivantes du corps pendulaire contre le support:
- la venue en position de butée contre le support du corps pendulaire lorsque ce dernier se déplace depuis la position de repos dans le sens trigonométrique, et
- la venue en position de butée contre le support du corps pendulaire lorsque ce dernier se déplace depuis la position de repos dans le sens non-trigonométrique.

Selon l'invention, le système d'amortissement de butée est solidaire du support, et non du corps pendulaire, le support du dispositif d'amortissement pendulaire étant rapporté sur le composant du système de transmission de couple, notamment sur le volant secondaire du double volant amortisseur.

Le dispositif de transmission de couple est par exemple un double volant amortisseur, auquel cas ce double volant amortisseur comprend :
- un volant primaire apte à être solidarisé à un vilebrequin de moteur thermique,
- un volant secondaire,
- une pluralité d'organes de rappel élastique coopérant d'une part avec le volant primaire et d'autre part avec le volant secondaire de manière à limiter la rotation du volant secondaire par rapport au volant primaire autour d'un axe de rotation.

Le composant sur lequel est rapporté le support du dispositif d'amortissement pendulaire peut alors être le volant secondaire. Au sens de la présente demande :
- « axialement » signifie « parallèlement à l'axe de rotation»,
- « radialement » signifie « le long d'un axe appartenant à un plan orthogonal à l'axe de rotation et coupant cet axe de rotation»,
- « angulairement » ou « circonférentiellement » signifie « autour de l'axe de rotation»,
- « orthoradialement » signifie « perpendiculairement à une direction radiale »,
- « solidaire » signifie « rigidement couplé »,
- l'ordre d'excitation d'un moteur thermique est égal au nombre d'explosions de ce moteur par tour de vilebrequin, et
- la position de repos d'un corps pendulaire est celle dans laquelle ce corps pendulaire est centrifugé sans être soumis à des oscillations de torsion provenant des acyclismes du moteur thermique.

Dans le cas d'un double volant amortisseur, ce dernier est avantageusement à pendule externe, c'est-à-dire que les corps pendulaires se situent : soit radialement au niveau des organes de rappel élastique, soit radialement extérieurement par rapport à ces organes de rappel élastique.

Le support du dispositif d'amortissement pendulaire peut être rapporté via des éléments de fixation, tels que des vis ou des rivets, sur le composant du dispositif de transmission de couple, notamment sur le volant secondaire du double volant amortisseur. Lorsqu'il s'agit du volant secondaire, le support du dispositif d'amortissement pendulaire est par exemple rapporté sur un flasque lui-même rapporté sur le moyeu secondaire de ce volant secondaire. Dans ce dernier cas, le système d'amortissement de butée peut être porté, ou maintenu en place, par des éléments de fixation, tels que des rivets, du support du dispositif d'amortissement pendulaire sur ce flasque.

Selon un premier exemple de mise en œuvre de l'invention, le système d'amortissement de butée peut être formé par une pluralité d'éléments de butée portés chacun par un élément de fixation du support du dispositif d'amortissement pendulaire au composant.

Selon ce premier exemple de mise en œuvre de l'invention, tous ces éléments de butée peuvent être identiques. Chacun de ces éléments est par exemple disposé autour d'un élément de fixation. Chaque élément de butée peut présenter des propriétés élastiques permettant l'amortissement des chocs liés à la venue en contact du corps pendulaire et du support. Chaque élément de butée est par exemple une rondelle réalisée en élastomère ou en caoutchouc, et montée autour d'un rivet ou d'une vis.

Selon ce premier exemple de mise en œuvre de l'invention, le déplacement du corps pendulaire s'effectuant circonférentiellement parlant entre deux éléments de fixation consécutifs circonférentiellement parlant, la venue en position de butée contre le support du corps pendulaire lorsque ce dernier se déplace depuis sa position de repos dans le sens trigonométrique peut être amortie par l'élément de butée porté par l'un de ces deux éléments de fixation, et la venue en positon de butée du corps pendulaire lorsque ce dernier se déplace depuis sa position de repos dans le sens non-trigonométrique peut être amortie par l'élément de butée porté par l'autre de ces deux élément de fixation.

Le cas échéant, le bord du corps pendulaire venant s'appliquer contre l'un de ces éléments de butée pour amortir la venue en position de butée dans le sens trigonométrique, respectivement non-trigonométrique, peut avoir une forme épousant celle de l'élément de butée, par exemple une forme arrondie.

Selon un deuxième exemple de mise en œuvre de l'invention, le système d'amortissement de butée permet également d'amortir la venue en position de butée contre le support du corps pendulaire lors de la chute radiale de ce dernier. Une telle chute radiale se produit par exemple lors de l'arrêt du moteur thermique du véhicule.

Selon ce deuxième exemple de mise en œuvre, le système d'amortissement de butée peut comprendre un anneau élastique s'étendant tout autour de l'axe de rotation. Cet anneau présente des propriétés élastiques permettant l'amortissement des chocs liés à la venue en contact du corps pendulaire et du support. L'anneau est par exemple réalisé en élastomère ou en caoutchouc. Une même pièce, à savoir l'anneau élastique précité, peut alors amortir toutes les positions de venue en butée contre le support du corps pendulaire.

Toujours ce deuxième exemple de mise en œuvre de l'invention, l'anneau élastique peut être disposé radialement sous le corps pendulaire et comprendre :
- deux premières portions, l'une de ces premières portions permettant d'amortir la venue en position de butée contre le support du corps pendulaire lorsque ce dernier se déplace depuis la position de repos dans le sens trigonométrique et l'autre de ces premières portions permettant d'amortir la venue en position de butée contre le support du corps pendulaire lorsque ce dernier se déplace depuis la position de repos dans le sens non-trigonométrique, et
- une deuxième portion permettant d'amortir la venue en position de butée contre le support du corps pendulaire lors de la chute radiale de ce dernier,
la deuxième portion étant disposée entre les deux premières portions, circonférentiellement parlant, et
chaque première portion s'étendant radialement vers l'extérieur au-delà de la deuxième portion.

Le bord radialement extérieur de la deuxième portion peut être sensiblement circulaire tandis que chaque première portion définit une bosse par rapport à cette deuxième portion.

L'anneau élastique peut présenter une dimension radiale sensiblement constante, lorsque l'on se déplace circonférentiellement. Dans ce cas, les bosses définies par les premières portions correspondent alors à des ondulations de l'anneau. Dans un tel cas, l'anneau se présente par exemple sous la forme d'une bande.

En variante, l'anneau peut présenter une dimension radiale variable, lorsque l'on se déplace circonférenriellement. L'anneau s'étend par exemple entre un contour radialement intérieur sensiblement circulaire et un contour radialement extérieur de position radiale variable, ce contour formant des bosses au niveau des premières portions.

Toujours selon le deuxième exemple de mise en œuvre, le dispositif d'amortissement pendulaire peut comprendre une pluralité de corps pendulaires se succédant circonférentiellement, et l'anneau élastique du système d'amortissement de butée peut alors comprendre une pluralité de premières portions et de deuxièmes portions, une même première portion permettant d'amortir la venue en position de butée contre le support du corps pendulaire lorsque ce dernier se déplace depuis la position de repos dans le sens trigonométrique et permettant également d'amortir la venue en position de butée contre le support du corps pendulaire voisin circonférentiellement lorsque ce dernier se déplace depuis sa position de repos dans le sens non-trigonométrique. Autrement dit, chaque première portion de l'anneau est commune à deux corps pendulaires voisins circonférentiellement.

Lorsqu'un corps pendulaire est au repos, il peut présenter un bord radialement intérieur radialement en regard d'une deuxième portion, et ce bord radialement intérieur peut présenter une forme globalement circulaire. Ce bord radialement intérieur comprend par exemple deux segments circulaires consécutifs. Ces segments circulaires sont par exemple de forme concave. A l'exception des portions de ce bord radialement intérieur du corps pendulaire qui vont coopérer avec une première portion de l'anneau, ce bord radialement intérieur peut conserver une forme globalement circulaire, avec deux segments circulaires consécutifs tels qu'exposés ci-dessus.

Toujours selon le deuxième exemple de mise en œuvre de l'invention, le système d'amortissement de butée peut comprendre un anneau métallique associé à l'anneau élastique, l'anneau élastique étant notamment interposé axialement entre le support du dispositif d'amortissement pendulaire et l'anneau métallique. L'anneau métallique peut permettre d'améliorer la tenue mécanique du système d'amortissement de butée et/ou d'améliorer la tenue en température du système d'amortissement de butée. Cet anneau métallique peut également, ou en variante, permettre d'améliorer la tenue au rivetage du système d'amortissement de butée, lorsqu'un tel rivetage est utilisé et/ou de rendre plus facile le montage du système d'amortissement de butée sur le dispositif de transmission de couple.

Selon le deuxième exemple de mise en œuvre de l'invention, le système d'amortissement de butée peut être :
- directement, c'est-à-dire sans pièce de fixation intermédiaire, porté par le support du dispositif d'amortissement pendulaire,
- directement, c'est-à-dire sans pièce de fixation intermédiaire, porté par une partie du composant du dispositif de transmission de couple, notamment le flasque rapporté sur le moyeu secondaire lorsque le dispositif de transmission de couple est un double volant amortisseur, ou
- directement, c'est-à-dire sans pièce de fixation intermédiaire, porté par un élément de protection du dispositif d'amortissement pendulaire, cet élément de protection protégeant par exemple le dispositif d'amortissement pendulaire de la poussière.

L'anneau élastique peut être rendu solidaire du support du dispositif d'amortissement pendulaire par surmoulage, collage ou adhésion.

En variante, l'anneau élastique peut être rendu solidaire du support via un accrochage par verrouillage de forme, par exemple via des queues d'aronde portées par l'anneau élastique et reçues dans des logements de forme complémentaire du support du dispositif d'amortissement pendulaire ou d'une partie du composant du dispositif de transmission de couple.

Selon le premier exemple de mise en œuvre ci-dessus, le corps pendulaire peut comprendre une première masse pendulaire disposée axialement d'un côté du support et une deuxième masse pendulaire disposée axialement d'un deuxième côté du support, la première et la deuxième masses pendulaires étant solidarisées entre elles par au moins un organe de liaison, le système d'amortissement de butée comprenant des éléments de butée disposés de chaque côté du support. Ainsi, chaque masse pendulaire du corps pendulaire peut voir sa venue en position de butée contre le support amortie par un élément de butée.

Selon une variante de ce premier exemple de mise en œuvre de l'invention, bien que le corps pendulaire comprenne deux masses pendulaires solidarisées entre elles, le système d'amortissement de butée ne comprend d'éléments de butée que d'un seul côté du support.

Selon le deuxième exemple de mise en œuvre ci-dessus, le corps pendulaire peut comprendre une première masse pendulaire disposée axialement d'un côté du support et une deuxième masse pendulaire disposée axialement d'un deuxième côté du support, la première et la deuxième masses pendulaires étant solidarisées entre elles par au moins un organe de liaison, le système d'amortissement de butée comprenant deux anneaux élastiques, un premier anneau élastique étant disposé du premier côté du support, et un deuxième anneau élastique étant disposé du deuxième côté du support. Chaque masse pendulaire du corps pendulaire voit ainsi sa venue en position de butée contre le support amortie par un anneau du système d'amortissement de butée.

Selon une variante de ce deuxième exemple de mise en œuvre de l'invention, bien que le corps pendulaire comprenne deux masses pendulaires solidarisées entre elles, le système d'amortissement de butée ne comprend un anneau élastique que d'un seul côté du support.

Selon le deuxième exemple de mise en œuvre, l'anneau élastique ne s'étend pas nécessairement tout autour de l'axe de rotation, pouvant par exemple s'étendre de façon discontinue. Dans un tel cas, l'anneau élastique peut comprendre uniquement des deuxièmes portions. Autrement dit, un tel anneau ne permet alors plus d'amortir la venue en position de butée contre le support du corps pendulaire lorsque ce dernier se déplace depuis la position de repos dans le sens trigonométrique ou dans le sens non-trigonomètrique.

Selon le premier ou le deuxième exemple de mise en œuvre, l'organe de liaison définit une deuxième piste de roulement sur laquelle roule l'un des organes de roulement du dispositif d'amortissement pendulaire pour guider le déplacement du corps pendulaire. Chaque organe de roulement peut alors être uniquement sollicité en compression entre la deuxième piste de roulement mentionnée ci-dessus et une première piste de roulement définie par le support. Ces première et deuxième pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Dans tout ce qui précède, chaque corps pendulaire peut être uniquement déplacé par rapport au support en translation autour d'un axe fictif parallèle à l'axe de rotation du support.

En variante, chaque corps pendulaire peut être déplacé par rapport au support à la fois :
- en translation autour d'un axe fictif parallèle à l'axe de rotation du support et,
- également en rotation autour du centre de gravité de ladite masse pendulaire, un tel mouvement étant encore appelé « mouvement combiné ».

Dans tout ce qui précède, l'amortissement des chocs entre le support du dispositif d'amortissement pendulaire et les corps pendulaires peut être non seulement permis par le système d'amortissement de butée tel que défini ci-dessus, mais également optionnellement par un ou plusieurs organes d'amortissement de butée portés par chaque corps pendulaire. Chacun de ces organes d'amortissement de butée est par exemple associé à un organe de liaison d'un corps pendulaire. La combinaison entre le système d'amortissement de butée solidaire du support et les organes d'amortissement de butée portés par les corps pendulaires peut permettre de réduire encore les chocs entre support et corps pendulaires, et ainsi les bruits et l'usure associés.

Dans tout ce qui précède, le dispositif d'amortissement pendulaire n'est pas nécessairement associé à un double volant amortisseur, étant par exemple monté dans un disque de friction pour embrayage, un convertisseur de couple hydrodynamique, un groupe motopropulseur hybride ou encore un double embrayage à sec ou humide.

L'invention a encore pour objet, selon un autre de ses aspects, un dispositif de transmission de couple tel qu'un double volant amortisseur, comprenant :
- un composant mobile en rotation autour d'un axe, et
- un dispositif d'amortissement pendulaire, comprenant un support rapporté sur le composant et au moins un corps pendulaire dont le déplacement par rapport au support est guidé par au moins deux organes de roulement,
le dispositif de transmission de couple comprenant un système d'amortissement de butée solidaire du support du dispositif d'amortissement pendulaire et permettant d'amortir la venue en position de butée contre le support du corps pendulaire lors de la chute radiale de ce dernier, ce système d'amortissement de butée comprenant des éléments de butée fixés par verrouillage de forme sur le composant.

Dans le cas où le dispositif de transmission de couple est un double volant amortisseur, les éléments du système d'amortissement de butée peuvent comprendre des queues d'aronde fixées dans des logements de forme complémentaire ménagées dans un flasque de liaison du support du dispositif d'amortissement pendulaire au moyeu secondaire du double volant amortisseur.

L'invention pourra être mieux comprise à la lecture de la description qui va suivre d'exemples non limitatifs de mise en œuvre de celle-ci et à l'examen du dessin annexé sur lesquels :
- la figure 1 représente un double volant amortisseur avec dispositif d'amortissement pendulaire au sein duquel peut être mise en œuvre l'invention,
- les figures 2 et 3 représentent, respectivement de face et en coupe, une partie de dispositif d'amortissement pendulaire selon un premier exemple de mise en œuvre de l'invention,
- les figures 4 à 6 représentent une première variante d'un dispositif d'amortissement pendulaire selon un deuxième exemple de mise en œuvre de l'invention, la figure 5 une vue en coupe de la figure 4, et la figure 6 représentant en isolé le système d'amortissement de butée du dispositif d'amortissement pendulaire des figures 4 et 5,
- la figure 7 est une vue similaire à la figure 4 d'une deuxième variante d'un dispositif d'amortissement pendulaire selon le deuxième exemple de mise en œuvre de l'invention,
- les figures 8 à 10 représentent une troisième variante d'un dispositif d'amortissement pendulaire selon le deuxième exemple de mise en œuvre de l'invention, les figures 8 et 10 étant des vues de face et la figure 9 étant une vue en coupe de la figure 8,
- les figures 11 et 12 montrent d'autres exemples de double volant amortisseur avec dispositif d'amortissement pendulaire auxquels peut être intégrée l'invention, et
- la figure 13 montre, de façon similaire à la figure 7, un autre aspect de l'invention.

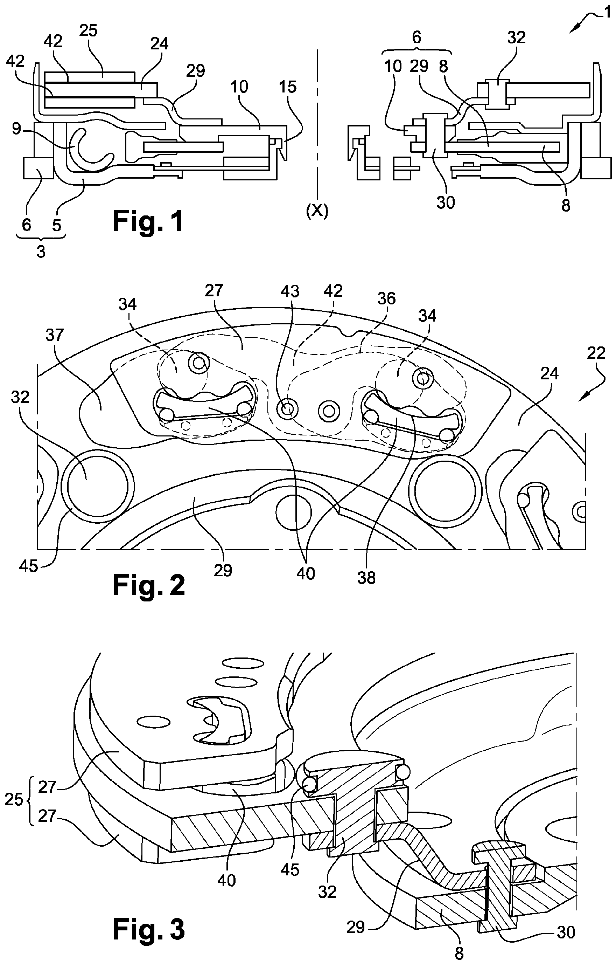

On a représenté à la figure 1 un dispositif de transmission de couple qui est ici un double volant amortisseur 1.

Ce double volant amortisseur 1 est intégré à un groupe motopropulseur de véhicule. Ce groupe motopropulseur comprend également un moteur thermique à deux, trois, quatre, six ou huit cylindres.

De façon connue, le double volant amortisseur 1 comprend un volant primaire 3. Le volant primaire 3 comprend un flasque 5 solidaire d'une couronne de démarreur 7.

Le double volant amortisseur 1 comprend encore un volant secondaire 6. Ce volant secondaire 6 comprend ici un flasque 8 interagissant avec une pluralité d'organes de rappel élastique montés en parallèle. Ces organes de rappel élastique comprennent ici des ressorts 9. Ces ressorts 9 permettent d'établir un mouvement de rotation d'amplitude limitée du volant secondaire 6 par rapport au volant primaire 3, autour d'un axe de rotation X.

On constate sur la figure 1 que ce flasque 8 est riveté sur un moyeu de sortie 10 du volant secondaire 6. Ce moyeu de sortie 10 présente par exemple des cannelures permettant son emmanchement sur un arbre.

Pour amortir la venue en position de butée du volant primaire 3 contre le volant secondaire 6 lors d'un déplacement relatif axial entre ces derniers, des moyens 15 tels que ceux décrits dans la demande déposée en France le 9 juin 2016 sous le numéro 1655311 peuvent être prévus. Le contenu de cette demande déposée le 9 juin 2016 est incorporé par référence à la présente demande.

Selon l'invention, un dispositif d'amortissement pendulaire 22 est prévu. Ce dispositif d'amortissement pendulaire 22 présente dans l'exemple décrit un unique support 24 portant des corps pendulaires 25, chaque corps pendulaire 25 étant ici formé par deux masses pendulaires 27 disposées chacune d'un côté du support 24 et solidarisées entre elles.

Bien que non visible sur la figure 1, un élément de protection 28 du dispositif d'amortissement pendulaire 22 vis-à-vis des poussières est prévu. Cet élément de protection 28 forme une coque, flexible ou non, s'étendant axialement au-delà du dispositif d'amortissement pendulaire 22 dans la direction opposée à celle des ressorts 9.

On constate ici que le support 24 du dispositif d'amortissement pendulaire 22 est rapporté sur un flasque 29 du volant secondaire 6, ce flasque 29 établissant une liaison physique entre le support 24 du dispositif d'amortissement pendulaire 22 et le moyeu de sortie 10 du volant secondaire 6. On constate dans l'exemple décrit que le flasque de liaison 29, le flasque 8 et le moyeu de sortie 10 sont ici assemblés par de mêmes moyens de liaison qui sont des rivets 30. Autrement dit, dans l'exemple considéré, une pluralité de rivets 30 sont prévus, et chaque rivet solidarise simultanément ensemble le flasque 8, le flasque de liaison 29 et le moyeu de sortie 10.

Dans l'exemple de la figure 1, la liaison entre le support 24 du dispositif d'amortissement pendulaire 22 et le flasque 29 se fait via des rivets 32 se succédant circonférentiellement.

Dans l'exemple décrit, plusieurs corps pendulaires 25 se succèdent circonférentiellement. Cinq corps pendulaires 25 sont ici représentés. Le déplacement de chaque corps pendulaire 25 par rapport au support 24 est guidé par deux organes de roulement 34 qui sont ici des rouleaux. L'un de ces rouleaux 34 est visible sur la figure 2. Chacun de ces rouleaux 34 roule, pour guider ce déplacement, d'une part sur une première piste de roulement 36 définie par un bord d'une ouverture 37 ménagée dans le support 24 et d'autre part sur une deuxième piste de roulement 38 définie par un bord d'une entretoise 40 solidarisant les deux masses pendulaires 27 du corps pendulaire 25 entre elles.

On constate également sur les figures 1 et 2 que des patins axiaux 42 sont prévus, ces patins étant portés par des masses pendulaires 27, par exemple via des pattes d'encliquetage 43, et amortissant les chocs axiaux entre ces masses pendulaires 27 et le support 24.

Selon le premier exemple de mise en œuvre de l'invention, qui va être décrit en référence aux figures 2 et 3, un système d'amortissement de butée est prévu pour amortir les venues en position de butée suivantes de chaque corps pendulaire 25 contre le support 24:
- la venue en position de butée contre le support 24 du corps pendulaire 25 lorsque ce dernier se déplace depuis la position de repos dans le sens trigonométrique, et
- la venue en position de butée contre le support 24 du corps pendulaire 25 lorsque ce dernier se déplace depuis la position de repos dans le sens non-trigonométrique.

Selon ce premier exemple de mise en œuvre tel que décrit en référence aux figures 2 et 3, le système d'amortissement de butée comprend une pluralité d'éléments de butée 45, et chacun de ces éléments de butées 45 est porté par un rivet 32. Chaque élément de butée 45 est ici une rondelle en élastomère qui est montée sur une tête de rivet 32 de manière à être disposée axialement dans un même plan qu'une des masses pendulaires 27. Dans l'exemple représenté sur la figure 3, les éléments de butée 45 ne sont présents que d'un seul côté du support 24. On constate sur les figures 2 et 3 que le bord radialement intérieur de la masse pendulaire 27 présente, au niveau de son extrémité circonférentielle, une forme arrondie, de manière à épouser le contour de la rondelle en élastomère 45.

Selon l'exemple de la figure 2, tous les éléments de butée 45 sont identiques. Le déplacement de chaque corps pendulaire 25 s'effectue circonférentiellement parlant entre deux éléments de butée 45 consécutifs, la venue en position de butée contre le support 24 d'un corps pendulaire 25 lorsque ce dernier se déplace depuis sa position de repos dans le sens trigonométrique étant amortie par l'un de ces deux éléments de butée 45, et la venue en positon de butée de ce corps pendulaire 25 lorsque ce dernier se déplace depuis sa position de repos dans le sens non-trigonométrique étant amortie par l'autre de ces deux éléments de butée 45.

Chaque élément de butée 45 interagit ici avec deux corps pendulaires 25 voisins circonférentiellement, amortissant la venue en position de butée de l'un de ces deux corps pendulaires 25 dans le sens trigonométrique, et amortissant la venue en position de butée de l'autre de ces deux corps pendulaires 25 dans le sens non-trigonométrique.

On va maintenant décrire en référence aux figures 3 à 10 un dispositif d'amortissement pendulaire avec un système d'amortissement de butée selon un deuxième exemple de mise en œuvre de l'invention.

Selon ce deuxième exemple de mise en œuvre, tel que décrit en référence aux figures 3 à 10, le système d'amortissement de butée 50 permet d'amortir les venues en position de butée suivantes de chaque corps pendulaire 25 contre le support 24:
- la venue en position de butée contre le support 24 du corps pendulaire 25 lorsque ce dernier se déplace depuis la position de repos dans le sens trigonométrique,
- la venue en position de butée contre le support 24 du corps pendulaire 25 lorsque ce dernier se déplace depuis la position de repos dans le sens non-trigonométrique, et
- la venue en position de butée contre le support 24 du corps pendulaire 25 lors de la chute radiale de ce dernier, cette chute radiale se produisant par exemple lors de l'arrêt du moteur thermique du véhicule.

Selon les figures 3 à 10, le système d'amortissement de butée 50 comprend un anneau élastique 52 réalisé en élastomère. Un seul anneau 52 est ici prévu et il est disposé d'un seul côté du support 24 du dispositif d'amortissement pendulaire 22. Cet anneau élastique 52 s'étend tout autour de l'axe X. Cet anneau élastique 52 est disposé radialement sous les masses pendulaires 27 qui sont disposées du côté correspondant du support 24.

Comme on peut le voir sur les figures 3 à 10, l'anneau élastique 52 comprend :
- une pluralité de premières portions 53, chacune de ces premières portions 53 permettant d'amortir la venue en position de butée contre le support 24 du corps pendulaire 25 lorsque ce dernier se déplace depuis la position de repos dans le sens trigonométrique et permettant également d'amortir la venue en position de butée contre le support 24 du corps pendulaire 25 voisin circonférentiellement lorsque ce dernier se déplace depuis sa position de repos dans le sens non-trigonométrique, et
- une pluralité de deuxièmes portions 54, chacune de ces deuxièmes portions 54 permettant d'amortir la venue en position de butée contre le support 24 d'une masse pendulaire 27 lors de la chute radiale de cette dernière.

On constate encore sur les figures 3 à 6 que chaque deuxième portion 54 est disposée entre deux premières portions 53, circonférentiellement parlant, et que chaque première portion 53 s'étend radialement vers l'extérieur au-delà des deuxièmes portions 54.

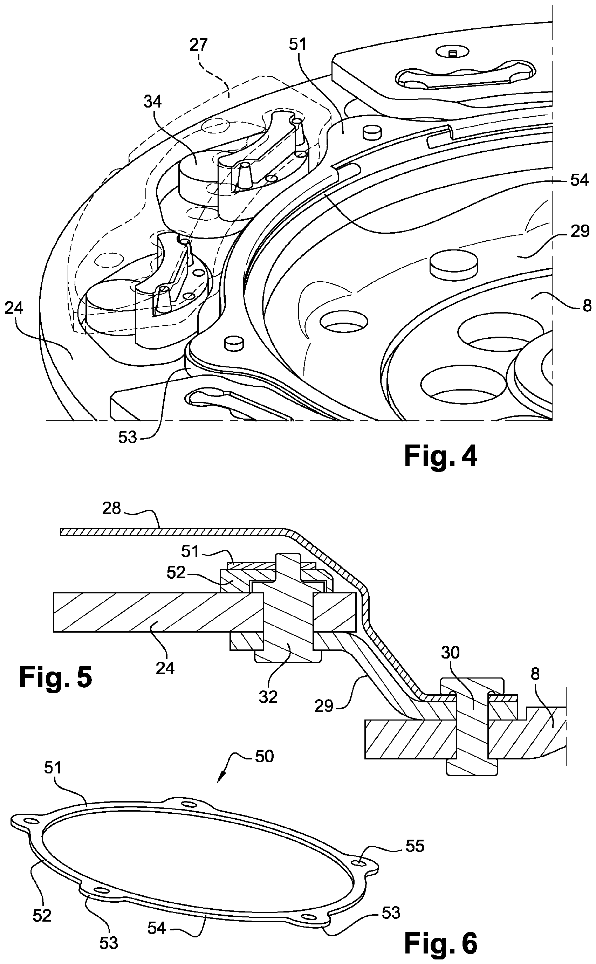

Sur les figures 4 à 6, qui décrivent une première variante de ce deuxième exemple de mise en œuvre de l'invention, l'anneau élastique 52 est monté sur le support 24 du dispositif d'amortissement pendulaire 22. Ce montage est ici permis, comme on peut le voir sur la figure 5 sur laquelle les masses pendulaires 27 ne sont pas représentées, par les rivets 32 permettant de relier le support 24 au flasque de liaison 29.

On constate encore sur les figures 4 à 6 que l'anneau élastique 52 peut présenter une dimension radiale variable. Cet anneau 52 présente en effet ici un contour radialement intérieur circulaire et un contour radialement extérieur de position radiale variable, ce contour radialement extérieur étant circulaire au niveau des deuxièmes portions 54 et formant des bosses au niveau des premières portions 53.

Comme représenté sur les figures 5 et 6, le système d'amortissement de butée peut, selon ce deuxième exemple de mise en œuvre, également comprendre un anneau 51 qui est en métal, par exemple en acier, associé à l'anneau élastique 52. L'anneau élastique 52 est ici axialement positionné entre le support 24 du dispositif d'amortissement pendulaire 22 et l'anneau métallique 51. Dans une variante, c'est l'anneau métallique 51 qui pourrait être axialement positionné entre le support 24 et l'anneau élastique 52.

Comme on peut également le voir sur les figures 4 et 6, des trous 55 peuvent être ménagés dans les premières portions 53 de l'anneau élastique 52, afin de permettre de fixer cet anneau 52 sur le double volant amortisseur, ces trous étant par exemple traversés par les rivets 32 précités.

Dans une alternative non décrite, l'anneau élastique 52 des figures 4 à 6 pourrait être une bande en élastomère ou en caoutchouc présentant une dimension radiale constante, cette bande présentant alors des ondulations pour former d'une part les premières portions 53 et les deuxièmes portions 54.

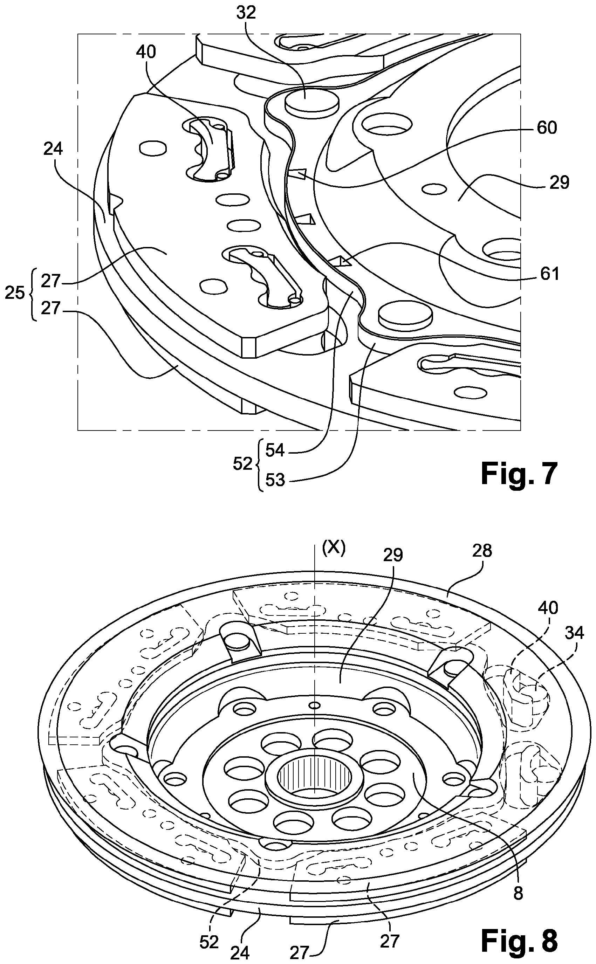

La figure 7 représente une deuxième variante du deuxième exemple de mise en œuvre de l'invention. Sur cette figure 7, l'anneau élastique 52 n'est plus monté sur le support 24 du dispositif d'amortissement pendulaire 22 mais sur le flasque de liaison 29. Des queues d'aronde 60 sont par exemple ménagées sur cet anneau élastique 52 et chaque queue d'aronde 60 coopère avec un logement 61 de forme complémentaire ménagé dans la portion d'extrémité radialement extérieure du flasque de liaison 29 pour fixer par verrouillage de forme l'anneau élastique 52 sur le flasque de liaison 29.

Dans l'exemple de la figure 7, l'anneau élastique 52 se présente sous la forme d'une bande de dimension radiale constante, qui est ondulée pour définir les premières portions 53 et les deuxièmes portions 54, mais un anneau élastique 52 selon la figure 6 peut également être utilisé lorsque cet anneau 52 est monté sur le flasque de liaison 29.

On va maintenant décrire en référence aux figures 8 à 10 une troisième variante du deuxième exemple de mise en œuvre de l'invention. Selon cette troisième variante, l'anneau élastique 52 est monté sur la coque 28 de protection vis-à-vis de la poussière du dispositif d'amortissement pendulaire 22. Le montage sur cette coque 28 se fait de manière à ce que l'anneau élastique 52 soit disposé radialement intérieurement par rapport aux masses pendulaires 27 disposées d'un même côté du support 24, et dans un même plan axial que ces dernières.

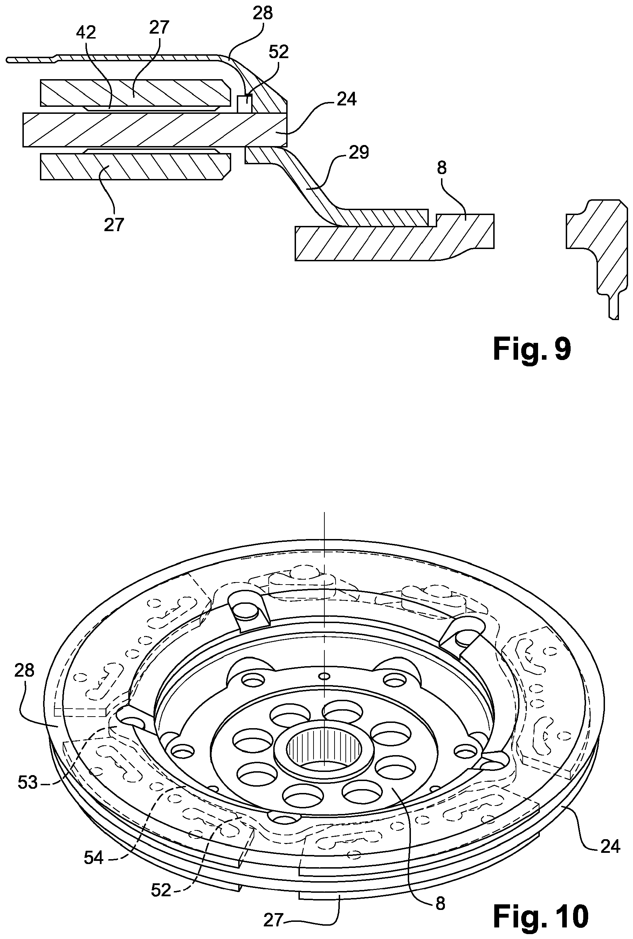

On constate que, selon cette troisième variante, l'anneau élastique 52 peut être une bande ondulée de dimension radiale constante, comme représenté sur les figures 8 et 9. L'anneau élastique 52 pourrait encore être similaire à celui de la figure 6, c'est-à-dire s'étendre entre un contour radialement intérieur circulaire et un contour radialement extérieur ondulé.

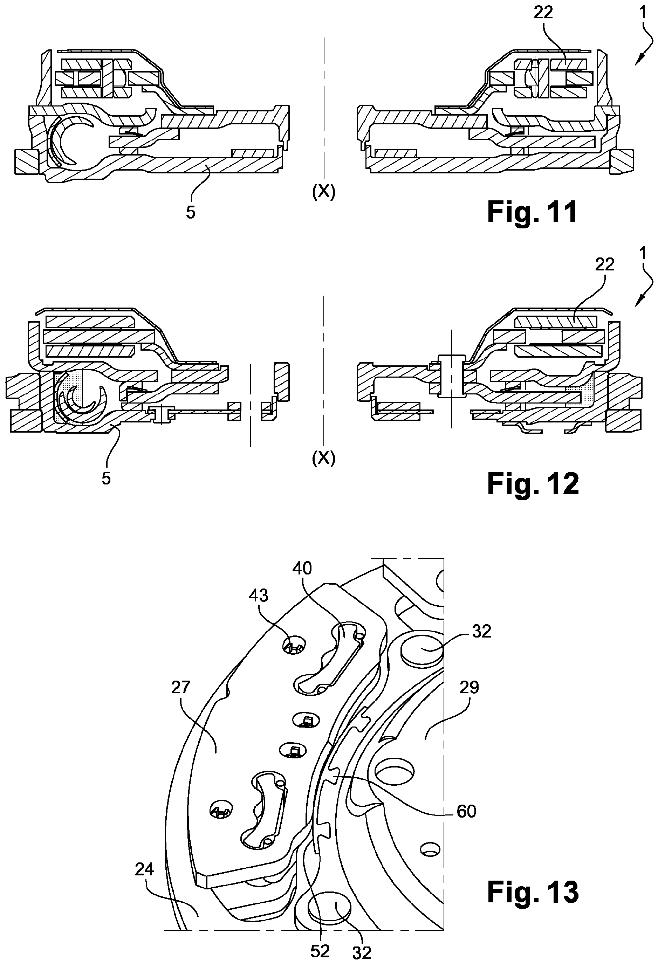

Les figures 11 et 12 représentent d'autres exemples de doubles volants amortisseurs à dispositif d'amortissement pendulaire 22 au sein desquels un système d'amortissement de butée selon les exemples des figures 2 à 10 peut être intégré.

Le cas échéant, le volant primaire 3 peut être complètement rigide, comme sur la figure 11, ou comprendre un flasque flexible, encore appelé « flex plate », comme sur la figure 12.

Il est également possible d'encapsuler en tout ou partie les corps pendulaires 25, par exemple pour les protéger de l'environnement et/ou pour prévenir tout risque de dégradation dans le double volant amortisseur 1 en cas d'éclatement d'un ou plusieurs corps pendulaires.

La figure 13 représente un double volant amortisseur 1 comprenant un système d'amortissement de butée différent. Selon cet exemple, le système d'amortissement de butée comprend un anneau élastique 52 qui s'étend de façon discontinue autour de l'axe X. Cet anneau est alors formé par la réunion d'une pluralité de languettes à distance les unes les autres circonférentiellement parlant. L'anneau élastique 52 ne sert ici qu'à amortir la venue en position de butée d'un corps pendulaire en cas de chute radiale. Similairement à ce qui a été décrit en référence à la figure 7, chaque languette est par exemple fixé sur le flasque de liaison 29 via une ou plusieurs queues d'aronde 60.

L'invention n'est pas limitée aux exemples qui viennent d'être décrits.

élastique 52 pourrait encore être similaire à celui de la figure 6, c'est-à-dire s'étendre entre un contour radialement intérieur circulaire et un contour radialement extérieur ondulé.

Les figures 11 et 12 représentent d'autres exemples de doubles volants amortisseurs à dispositif d'amortissement pendulaire 22 au sein desquels un système d'amortissement de butée selon les exemples des figures 2 à 10 peut être intégré.

Le cas échéant, le volant primaire 3 peut être complètement rigide, comme sur la figure 11, ou comprendre un flasque flexible, encore appelé « flex plate », comme sur la figure 12.

Il est également possible d'encapsuler en tout ou partie les corps pendulaires 25, par exemple pour les protéger de l'environnement et/ou pour prévenir tout risque de dégradation dans le double volant amortisseur 1 en cas d'éclatement d'un ou plusieurs corps pendulaires.

La figure 13 représente un double volant amortisseur 1 comprenant un système d'amortissement de butée différent. Selon cet exemple, le système d'amortissement de butée comprend un anneau élastique 52 qui s'étend de façon discontinue autour de l'axe X. Cet anneau est alors formé par la réunion d'une pluralité de languettes à distance les unes les autres circonférentiellement parlant. L'anneau élastique 52 ne sert ici qu'à amortir la venue en position de butée d'un corps pendulaire en cas de chute radiale. Similairement à ce qui a été décrit en référence à la figure 7, chaque languette est par exemple fixé sur le flasque de liaison 29 via une ou plusieurs queues d'aronde 60.

L'invention n'est pas limitée aux exemples qui viennent d'être décrits.

## Revendications

1. Dispositif de transmission de couple (1), comprenant :
- un composant (6) mobile en rotation autour d'un axe (X), et
- un dispositif d'amortissement pendulaire (22), comprenant un support (24) rapporté sur le composant (6) et au moins un corps pendulaire (25) dont le déplacement par rapport au support est guidé par au moins deux organes de roulement (34),
le dispositif d'amortissement pendulaire (22) comprenant un système d'amortissement de butée solidaire du support (24) du dispositif d'amortissement pendulaire (22) et permettant d'amortir au moins les venues en position de butée suivantes du corps pendulaire (25) contre le support (24):
- la venue en position de butée contre le support (24) du corps pendulaire (25) lorsque ce dernier se déplace depuis la position de repos dans le sens trigonométrique, et
- la venue en position de butée contre le support (24) du corps pendulaire (25) lorsque ce dernier se déplace depuis la position de repos dans le sens non-trigonométrique,
**caractérisé en ce que** le corps pendulaire (25) comprend une première masse pendulaire (27) disposée axialement d'un côté du support et une deuxième masse pendulaire (27) disposée axialement d'un deuxième côté du support, la première et la deuxième masses pendulaires étant solidarisées entre elles par au moins un organe de liaison (40), l'organe de liaison (40) définissant une piste de roulement (38) sur laquelle roule l'un des organes de roulement du dispositif d'amortissement pendulaire pour guider le déplacement du corps pendulaire.

2. Dispositif de transmission de couple selon la revendication 1, le support (24) du dispositif d'amortissement pendulaire (22) étant rapporté via des éléments de fixation (32) sur le composant (6), et le système d'amortissement de butée étant formé par une pluralité d'éléments de butée (45) portés chacun par un élément de fixation (32).

3. Dispositif de transmission de couple selon la revendication 2, le déplacement du corps pendulaire (25) s'effectuant, circonférentiellement parlant entre deux éléments de fixation (32) consécutifs circonférentiellement parlant, la venue en butée contre le support (24) du corps pendulaire (25) lorsque ce dernier se déplace depuis sa position de repos dans le sens trigonométrique étant amortie par l'élément de butée (45) porté par l'un de ces deux éléments de fixation (32), et la venue en butée du corps pendulaire lorsque ce dernier se déplace depuis sa position de repos dans le sens non-trigonométrique étant amortie par l'élément de butée (45) porté par l'autre de ces deux élément de fixation (32).

4. Dispositif de transmission de couple selon la revendication 1, le système d'amortissement de butée (50) permettant également d'amortir la venue en position de butée contre le support (24) du corps pendulaire (25) lors de la chute radiale de ce dernier.

5. Dispositif de transmission de couple selon la revendication 4, le système d'amortissement de butée comprenant un anneau élastique (52) s'étendant tout autour de l'axe de rotation (X).

6. Dispositif de transmission de couple selon la revendication 5, l'anneau (52) étant disposé radialement sous le corps pendulaire (25) et comprenant :
- deux premières portions (53), l'une de ces premières portions permettant d'amortir la venue en position de butée contre le support (24) du corps pendulaire (25) lorsque ce dernier se déplace depuis la position de repos dans le sens trigonométrique et l'autre de ces premières portions (53) permettant d'amortir la venue en position de butée contre le support du corps pendulaire lorsque ce dernier se déplace depuis la position de repos dans le sens non-trigonométrique, et
- une deuxième portion (54) permettant d'amortir la venue en position de butée contre le support du corps pendulaire lors de la chute radiale de ce dernier,
la deuxième portion (54) étant disposée entre les deux premières portions (53), circonférentiellement parlant, et
chaque première portion (53) s'étendant radialement vers l'extérieur au-delà de la deuxième portion (54).

7. Dispositif de transmission de couple selon la revendication 6, comprenant une pluralité de corps pendulaires (25) se succédant circonférentiellement, l'anneau (52) du système d'amortissement de butée comprenant une pluralité de premières portions (53) et de deuxièmes portions (54), une même première portion permettant d'amortir la venue en position de butée contre le support (24) du corps pendulaire lorsque ce dernier se déplace depuis la position de repos dans le sens trigonométrique et permettant également d'amortir la venue en position de butée contre le support du corps pendulaire voisin circonférentiellement lorsque ce dernier se déplace depuis la position de repos dans le sens non-trigonométrique.

8. Dispositif de transmission de couple selon l'une quelconque des revendications 4 à 7, le système d'amortissement de butée étant :
- directement porté par le support (24) du dispositif d'amortissement pendulaire (22),
- directement porté par une partie (29) du composant (6) du dispositif de transmission de couple, ou
- directement porté par un élément de protection (28) du dispositif d'amortissement pendulaire (22).

9. Dispositif de transmission de couple selon l'une quelconque des revendications précédentes, étant un double volant amortisseur (1), comprenant :
- un volant primaire (3) apte à être solidarisé à un vilebrequin de moteur thermique,
- un volant secondaire (6),
- une pluralité d'organes de rappel élastique (9) coopérant d'une part avec le volant primaire (3) et d'autre part avec le volant secondaire (6) de manière à limiter la rotation du volant secondaire (6) par rapport au volant primaire (3) autour d'un axe de rotation (X), le un support (24) du dispositif d'amortissement pendulaire (22) étant rapporté sur le volant secondaire (6).

10. Dispositif selon la revendication 9, le support (24) du dispositif d'amortissement pendulaire (22) étant rapporté sur un flasque (29) lui-même rapporté sur le moyeu secondaire (10) du volant secondaire (6), et le système d'amortissement de butée étant porté, ou maintenu en place, par des éléments de fixation (32) du support (24) du dispositif d'amortissement pendulaire (22) sur ce flasque de liaison (29).

11. Dispositif selon la revendication 9, le support (24) du dispositif d'amortissement pendulaire (22) étant rapporté sur un flasque (29) lui-même rapporté sur le moyeu secondaire (10) du volant secondaire (6), et le système d'amortissement de butée étant :
- directement porté par le support (24) du dispositif d'amortissement pendulaire (22),
- directement porté par la flasque de liaison (29) du volant secondaire (6), ou
- directement porté par un élément de protection (28) du dispositif d'amortissement pendulaire (22).

## Patentansprüche

1. Drehmomentübertragungsvorrichtung (1), welche umfasst:
- eine um eine Achse (X) drehbewegliche Komponente (6), und
- eine Pendeldämpfungsvorrichtung (22), die einen an der Komponente (6) angebrachten Träger (24) und mindestens einen Pendelkörper (25), dessen Bewegung bezüglich des Trägers von mindestens zwei Wälzelementen (34) geführt wird, umfasst,
wobei die Pendeldämpfungsvorrichtung (22) ein Anschlagdämpfungssystem umfasst, das mit dem Träger (24) der Pendeldämpfungsvorrichtung (22) fest verbunden ist und ermöglicht, mindestens die folgenden Vorgänge des Gelangens des Pendelkörpers (25) in die Anschlagposition am Träger (24) zu dämpfen:
- das Gelangen des Pendelkörpers (25) in die Anschlagposition am Träger (24), wenn sich dieser erstere von der Ruheposition aus gegen den Uhrzeigersinn bewegt,
- das Gelangen des Pendelkörpers (25) in die Anschlagposition am Träger (24), wenn sich dieser erstere von der Ruheposition aus im Uhrzeigersinn bewegt, **dadurch gekennzeichnet, dass** der Pendelkörper (25) eine erste Pendelmasse (27), die axial auf einer Seite des Trägers angeordnet ist, und eine zweite Pendelmasse (27), die axial auf einer zweiten Seite des Trägers angeordnet ist, umfasst, wobei die erste und die zweite Pendelmasse durch mindestens ein Verbindungsorgan (40) fest miteinander verbunden sind, wobei das Verbindungsorgan (40) eine Laufbahn (38) definiert, auf welcher eines der Wälzelemente der Pendeldämpfungsvorrichtung rollt , um die Bewegung des Pendelkörpers zu führen.

2. Drehmomentübertragungsvorrichtung nach Anspruch 1, wobei der Träger (24) der Pendeldämpfungsvorrichtung (22) über Befestigungselemente (32) an der Komponente (6) angebracht ist und das Anschlagdämpfungssystem von mehreren Anschlagelementen (45) gebildet wird, die jeweils von einem Befestigungselement (32) getragen werden.

3. Drehmomentübertragungsvorrichtung nach Anspruch 2, wobei die Bewegung des Pendelkörpers (25), in Umfangsrichtung betrachtet, zwischen zwei Befestigungselementen (32) erfolgt, die, in Umfangsrichtung betrachtet, aufeinanderfolgen, wobei das Anschlagen des Pendelkörpers (25) am Träger (24), wenn sich dieser erstere von seiner Ruheposition aus gegen den Uhrzeigersinn bewegt, von dem Anschlagelement (45) gedämpft wird, das von dem einen dieser zwei Befestigungselemente (32) getragen wird, und wobei das Anschlagen des Pendelkörpers, wenn sich dieser letztere von seiner Ruheposition aus im Uhrzeigersinn bewegt, von dem Anschlagelement (45) gedämpft wird, das von dem anderen dieser zwei Befestigungselemente (32) getragen wird.

4. Drehmomentübertragungsvorrichtung nach Anspruch 1, wobei das Anschlagdämpfungssystem (50) außerdem ermöglicht, das Gelangen des Pendelkörpers (25) in die Anschlagposition am Träger (24) beim radialen Fall dieses ersteren zu dämpfen.

5. Drehmomentübertragungsvorrichtung nach Anspruch 4, wobei das Anschlagdämpfungssystem einen elastischen Ring (52) umfasst, der sich rund um die Drehachse (X) herum erstreckt.

6. Drehmomentübertragungsvorrichtung nach Anspruch 5, wobei der Ring (52) radial unter dem Pendelkörper (25) angeordnet ist und umfasst:
- zwei erste Abschnitte (53), wobei der eine dieser ersten Abschnitte ermöglicht, das Gelangen des Pendelkörpers (25) in die Anschlagposition am Träger (24) zu dämpfen, wenn sich dieser erstere von der Ruheposition aus gegen den Uhrzeigersinn bewegt, und der andere dieser ersten Abschnitte (53) ermöglicht, das Gelangen des Pendelkörpers in die Anschlagposition am Träger zu dämpfen, wenn sich dieser erstere von der Ruheposition aus im Uhrzeigersinn bewegt, und
- einen zweiten Abschnitt (54), der es ermöglicht, das Gelangen des Pendelkörpers in die Anschlagposition am Träger beim radialen Fall dieses ersteren zu dämpfen, wobei der zweite Abschnitt (54), in Umfangsrichtung betrachtet, zwischen den zwei ersten Abschnitten (53) angeordnet ist, und
wobei sich jeder erste Abschnitt (53) über den zweiten Abschnitt (54) hinaus radial nach außen erstreckt.

7. Drehmomentübertragungsvorrichtung nach Anspruch 6, welche mehrere Pendelkörper (25) umfasst, die in Umfangsrichtung aufeinanderfolgen, wobei der Ring (52) des Anschlagdämpfungssystems mehrere erste Abschnitte (53) und zweite Abschnitte (54) umfasst, wobei ein und derselbe erste Abschnitt ermöglicht, das Gelangen des Pendelkörpers in die Anschlagposition am Träger (24) zu dämpfen, wenn sich dieser erstere von der Ruheposition aus gegen den Uhrzeigersinn bewegt, und auch ermöglicht, das Gelangen des in Umfangsrichtung benachbarten Pendelkörpers in die Anschlagposition am Träger zu dämpfen, wenn sich dieser erstere von der Ruheposition aus im Uhrzeigersinn bewegt.

8. Drehmomentübertragungsvorrichtung nach einem der Ansprüche 4 bis 7, wobei das Anschlagdämpfungssystem:
- direkt vom Träger (24) der Pendeldämpfungsvorrichtung (22) getragen wird,
- direkt von einem Teil (29) der Komponente (6) der Drehmomentübertragungsvorrichtung getragen wird, oder
- direkt von einem Schutzelement (28) der Pendeldämpfungsvorrichtung (22) getragen wird.

9. Drehmomentübertragungsvorrichtung nach einem der vorhergehenden Ansprüche, welche ein Zweimassenschwungrad (1) ist, welches umfasst:
- ein primäres Schwungrad (3), das mit einer Kurbelwelle eines Verbrennungsmotors fest verbindbar ist,
- ein sekundäres Schwungrad (6),
- mehrere elastische Rückstellorgane (9), die einerseits mit dem primären Schwungrad (3) und andererseits mit dem sekundären Schwungrad (6) zusammenwirken, um die Drehung des sekundären Schwungrades (6) in Bezug auf das primäre Schwungrad (3) um eine Drehachse (X) zu begrenzen, wobei der eine Träger (24) der Pendeldämpfungsvorrichtung (22) an dem sekundären Schwungrad (6) angebracht ist.

10. Vorrichtung nach Anspruch 9, wobei der Träger (24) der Pendeldämpfungsvorrichtung (22) an einem Seitenstück (29) angebracht ist, das seinerseits an der sekundären Nabe (10) des sekundären Schwungrades (6) angebracht ist, und wobei das Anschlagdämpfungssystem von Elementen zur Befestigung (32) des Trägers (24) der Pendeldämpfungsvorrichtung (22) an diesem Seitenstück (29) getragen oder in Position gehalten wird.

11. Vorrichtung nach Anspruch 9, wobei der Träger (24) der Pendeldämpfungsvorrichtung (22) an einem Seitenstück (29) angebracht ist, das seinerseits an der sekundären Nabe (10) des sekundären Schwungrades (6) angebracht ist, und wobei das Anschlagdämpfungssystem:
- direkt vom Träger (24) der Pendeldämpfungsvorrichtung (22) getragen wird,
- direkt von dem Verbindungsseitenstück (29) des sekundären Schwungrades (6) getragen wird, oder
- direkt von einem Schutzelement (28) der Pendeldämpfungsvorrichtung (22) getragen wird.

## Claims

1. A torque transmission device (1), comprising:
- a component (6) able to rotate about an axis (X) and
- a pendular damping device (22) comprising a support (24) added to the component (6) and at least one pendular body (25), the movement of which relative to the support being guided by at least two rolling members (34),
the pendular damping device (22) comprising a stop damping system rigidly connected to the support (24) of the pendular damping device (22) and allowing damping of at least the following transitions of the pendular body (25) to a stop position against the support (24):
- the transition to a stop position against the support (24) of the pendular body (25) when said body moves from the rest position in the trigonometric direction, and
- the transition to a stop position against the support (24) of the pendular body (25) when said body moves from the rest position in the non-trigonometric direction,
**characterized in that** the pendular body (25) comprises a first pendular mass (27) arranged axially on one side of the support and a second pendular mass (27) arranged axially on a second side of the support, the first and the second pendular masses being rigidly connected together by at least one connecting member (40), the connecting member (40) defining a rolling track (38) on which one of the rolling members of the pendular damping device rolls in order to guide the movement of the pendular body.

2. The torque transmission device as claimed in claim 1, the support (24) of the pendular damping device (22) being added to the component (6) via fixing elements (32) and the stop damping system being formed by a plurality of stop elements (45), each borne by a fixing element (32).

3. The torque transmission device as claimed in claim 2, the movement of the pendular body (25) being carried out, circumferentially speaking, between two consecutive fixing elements (32), circumferentially speaking, the transition of the pendular body (25) to a stop position against the support (24) when said body moves from its rest position in the trigonometric direction being damped by the stop element (45) borne by one of these two fixing elements (32), and the transition of the pendular body to a stop position when said body moves from its rest position in the non-trigonometric direction being damped by the stop element (45) borne by the other of these two fixing elements (32).

4. The torque transmission device as claimed in claim 1, the stop damping system (50) also allowing the damping of the transition of the pendular body (25) to a stop position against the support (24) in the case of said pendular body dropping radially.

5. The torque transmission device as claimed in claim 4, the stop damping system comprising a resilient ring (52) extending all around the axis of rotation (X).

6. The torque transmission device as claimed in claim 5, the ring (52) being arranged radially below the pendular body (25) and comprising:
- two first portions (53), one of these first portions allowing the damping of the transition of the pendular body (25) to a stop position against the support (24) when said body moves from the rest position in the trigonometric direction, and the other of these first portions (53) allowing the damping of the transition of the pendular body to a stop position against the support when said body moves from the rest position in the non-trigonometric direction, and
- a second portion (54) allowing the damping of the transition of the pendular body to a stop position against the support in the case of said pendular body dropping radially,
the second portion (54) being arranged between the two first portions (53), circumferentially speaking, and
each first portion (53) extending radially to the outside beyond the second portion (54).

7. The torque transmission device as claimed in claim 6, comprising a plurality of pendular bodies (25) following one another circumferentially, the ring (52) of the stop damping system comprising a plurality of first portions (53) and second portions (54), the same first portion allowing the damping of the transition of the pendular body to a stop position against the support (24) when said body moves from the rest position in the trigonometric direction, and also allowing the damping of the transition of the circumferentially adjacent pendular body to a stop position against the support when said body moves from the rest position in the non-trigonometric direction.

8. The torque transmission device as claimed in any one of claims 4 to 7, the stop damping system being:
- directly borne by the support (24) of the pendular damping device (22),
- directly borne by a part (29) of the component (6) of the torque transmission device or
- directly borne by a protection element (28) of the pendular damping device (22).

9. The torque transmission device as claimed in any one of the preceding claims, being a dual mass flywheel (1), comprising:
- a primary flywheel (3) capable of being rigidly connected to a crankshaft of the combustion engine,
- a secondary flywheel (6),
- a plurality of resilient return members (9) cooperating, on the one hand, with the primary flywheel (3) and, on the other hand, with the secondary flywheel (6) so as to limit the rotation of the secondary flywheel (6) relative to the primary flywheel (3) about an axis of rotation (X), the support (24) of the pendular damping device (22) being added to the secondary flywheel (6).

10. The device as claimed in claim 9, the support (24) of the pendular damping device (22) being added to a flange (29) which in turn is added to the secondary hub (10) of the secondary flywheel (6), and the stop damping system being borne or held in place by fixing elements (32) for fixing the support (24) of the pendular damping device (22) to this connecting flange (29).

11. The device as claimed in claim 9, the support (24) of the pendular damping device (22) being added to a flange (29) which in turn is added to the secondary hub (10) of the secondary flywheel (6), and the stop damping system being:
- directly borne by the support (24) of the pendular damping device (22),
- directly borne by the connecting flange (29) of the secondary flywheel (6), or
- directly borne by a protection element (28) of the pendular damping device (22).
